# EUROPÄISCHE PATENTSCHRIFT

(11) **EP 2 795 143 B1**
(45) Veröffentlichungstag und Bekanntmachung des Hinweises auf die Patenterteilung: **14.09.2016**
(21) Anmeldenummer: 12823136.2
(22) Anmeldetag: 20.12.2012
(51) Int. Cl.: F16C 17/04, F16C 33/10

(54) **AXIALGLEITLAGER**
AXIAL SLIDING BEARING
PALIER AXIAL À COULISSEMENT

(30) Priorität: 21.12.2011 DE 102011121768
(43) Veröffentlichungstag der Anmeldung: 29.10.2014
(73) Patentinhaber: NIDEC GPM GmbH, 98673 Auengrund /OT Merbelsrod (DE)
(72) Erfinder: BLECHSCHMIDT, Andreas, 98544 Zella-Mehlis (DE); KIRCHNER, Sebastian, 98749 Steinheid (DE)
(86) Internationale Anmeldenummer: PCT/DE2012/001219
(87) Internationale Veröffentlichungsnummer: WO 2013/091610

(56) Entgegenhaltungen:
- DE-A1- 1 957 058
- DE-A1- 2 027 607
- DE-A1- 2 211 414
- DE-B- 1 208 952
- US-A- 3 495 886
- US-A- 4 668 106

## Beschreibung

Die Erfindung betrifft ein Axialgleitlager mit einem zwischen zwei ebenen, ringförmigen, gegeneinander druckbelasteten Gleitflächen angeordneten Gleitring.

Bei Radialgleitlagern wird am Umfang zwischen den ineinander gleitenden Zylindermänteln, unter anderem in Abhängigkeit vom Schmierspalt, der Viskosität des Schmiermittels und in Verbindung mit der gewünschten Mindestdrehzähl, ein keilförmiger Schmierspalt mit einem hydrodynamischen Schmierdruck aufgebaut auf dem die im Gleitlager rotierende Welle aufschwimmt und geringste Reibungsverluste bei absoluter Verschleißfreiheit gewährleistet.

Um nun auch bei Axialgleitlagern diese, für einen tragenden hydrodynamischen Schmierdruck erforderlichen, keilförmigen Schmierspalte zu erzeugen ist ein wesentlich höherer fertigungstechnischer Aufwand erforderlich.

So ist es einerseits im Stand der Technik üblich, die Lauffläche, mit in Umlaufrichtung verjüngten Keilflächen zu versehen, die jeweils von einer radial verlaufenden Schmiernut ausgehen und an die sich Rastflächen zur Abstützung der Welle im Stillstand anschließen, zu versehen.

Diese schwach geneigten Keilflächen müssen jedoch mit hohem Fertigungsaufwand durch Fräsen oder Schleifen eingebracht werden.

Um nun den Fertigungsaufwand bei der Herstellung dieser Keilflächen zu reduzieren, wurde in der DE 1 208 952 A wie auch in der DE 10 2009 031 760 A1 vorgeschlagen, zwischen die ebenen gegeneiriander belasteten Druckflächen eine, durch plastische Verformung aus Federstahl gefertigte, gleichmäßig gewellte Gleitringscheibe anzuordnen, die am Lagerumfang eine Vielzahl von Keilwinkeln ausbildet, welche infolge elastischer Verformung in Abhängigkeit von der jeweiligen Axiallast variieren und so zwischen den Druckflächen die dynamische Tragkraft aufbauen kann.

Auf Grund der bei diesen Lösungen nach DE 1 208 952 A und DE 10 2009 031 760 A1 vorgeschlagenen durch Prägen stark verformte Geometrie macht es sich notwendig, die Blechstärke an die angestrebte Geometrie des Profilringes anzupassen, welche dadurch relativ dünn ausfallen muss.

Die in der DE 1 208 952 A vorgestellte, gewellte Gleitringscheibe ist ausschließlich schwimmend zwischen den beiden Druckflächen des Axialgleitlagers angeordnet, wohingegen die in der DE 10 2009 031 760 A1 vorgeschlagene, zwischen den ebenen gegeneinander belasteten Druckflächen angeordnete gewellte Gleitringscheibe sowohl schwimmend, wie auch ein oder beidseitig lagefixiert zwischen den Druckflächen des Axialgleitlagers angeordnet sein kann.

Auf Grund des bauteilbedingten Einsatzes von dünnwandigem Blech/Federstahl zur Herstellung dieser gewellten Gleitringscheiben ergibt sich mit steigender Verformung des Keilflächenbereiches unter Axiallast eine ungünstige geometrische Veränderung des Keilbereiches, welcher bei weiter steigender Axiallast zum Verlust der Keilwirkung führt. Die gewellte Gleitringscheiben der o.g. Lösungen haben den Nachteil, dass sich bei Überschreiten einer Grenzbelastung, die bei üblichen Keilsegmentlagern einer mittleren Druckbelastung von etwa 30 bis 40 bar pro Segment entspricht, eine Verformung des dünnwandigen Bogensegmentes des Blechringes einstellt, so dass bedingt durch die dünnwandige Ausbildung ein Abflachen des tragenden Bereiches der Gleitringscheibe eintritt, der sich zwangsläufig negativ auf die erwünschte "tragende" Funktion Kettftächenbereiche auswirkt.

Wobei mit weiter zunehmender Axiallast sich dann die durch die "Wellung" vorgegebene Keilneigung gravierend derart verändert, dass sich ein Tellerfedereffekt einstellt welcher dann die hydrodynamische Tragfähigkeit des Axialgleitlagers bei vollständigen Verlust der Schmierkeilwirkung erheblich beeinträchtigt.

Damit ist ein Übergang in den Bereich der Mischreibung verbunden, der dann in Verbindung mit dem stark vorgespannten gewellten Gleitringscheibe aus Federstahl zu erheblichen Verschleiß, und in Folge dessen zum Totalausfall des Axialgleitlagers führen kann

In der DE 1 065 671 A wurde demgegenüber vorgeschlagen, die ruhende Anlauffläche an Rücken mit radialen Ausnehmungen zu versehen, so dass sie nur auf einzelnen Füßchen aufliegt. Durch diese Ausbildung des Auflagerückens kann die Lauffläche an den freitragenden Stellen durch Pressen um einige hundertstel Millimeter durchgedrückt werden. Hierdurch entsteht eine keilförmige, unterteilte Lauffläche welche bei Drehung der Gegenlaufscheibe einen hydrodynamischen Druck aufbaut und so eine Tragfähigkeit gewährleistet. Der Nachteil dieser Lösung besteht jedoch darin, dass die durch bleibende Verformung ausgebildeten Keilflächen für alle Anwendungsfälle die gleiche Gestalt aufweisen.

Der Schmierspalt kann sich an die jeweiligen Belastungsverhältnisse nicht selbsttätig optimal anpassen um dadurch eine optimale Tragfähigkeit des Lagers zu gewährleisten, so dass bei derartigen axialen Lagerungen mit starker Mischreibung zu rechnen ist, welche im Dauerbetrieb zum Ausfall des Lagers führen kann.

In der DE 1 957 058 A wird nun vorgeschlagen, eine ebene aus einem Lagerwerkstoff insbesondere einem Verbundlagerwerkstoff bestehendes Ringscheibe beidseitig sägeartig zu verformen "durchzubeulen" und anschließend die als Auflagerücken vorgesehene Seite plan zu bearbeiten; wobei die auf der Lauffläche vorhandenen Keilflächen eine Steigung von 0,5 ‰ bis 3 ‰ vorzugsweise 1 ‰ aufweisen.

Auch bei dieser Lösung nach der DE 1 957 058 A besteht der wesentliche Nachteil wiederum darin, dass die jeweils festgelegte Steigung der Keilfläche sich mit zunehmender Axialkraft nicht mehr verändert, so dass das Axialgleitlager stets nur für einen Betriebszustand (Drehzahl, Belastung, usw.) optimal ausgelegt ist. Dabei sind diese Lager gegen leichte Schiefstellung der Welle besonders empfindlich, da durch eine einseitige Überbelastung einzelner Bereich der Ringscheibe (Kantenpressung) hervorgerufen wird, so dass auch bei dieser Lösung wiederum mit starker Mischreibung zu rechnen ist, die dann insbesondere bei Lagern die unter erschwerten Betriebsbedingungen eingesetzt werden, wie sie zum Beispiel bei Wasserschmierung im Pumpenbau auftreten, dann im Dauerbetrieb zum Ausfall des Lagers führen kann.

Weiterhin ist aus der US 3 495 886 A, das die Merkmale des Oberbegriffs von Anspruch 1 offenbart, eine Lageranordnung für ein Axiallager bekannt, welches als Blechprägeteil ausgeführt ist, und welches, durch das Herstellungsverfahren bedingt, wiederum wie bereits auch in Verbindung mit den Lösungen nach DE 1 208 952 A und DE 10 2009 031 760 A1 vorgeschlagen, die Verwendung von dünnen Blechen vorsieht.

Versuchsreihen mit derartigen Blechsegmentlagern aus dünnen Blechen haben dabei gezeigt, dass derartige Blechsegmentlager sehr schwingungsanfällig sind, und dass beim Auftreten von Axialschwingungen dünnwandige Blechsegmentlager innerhalb sehr kurzer Zeit zerstört werden.

Wobei der Zeitraum in dem diese Zerstörung stattfindet oftmals unter 5 Minuten liegt.

Bedingt durch die in der US 3 495 886 A gewählten Prägetechnologie ist jedoch eine Anhebung der Blechstärke bei der Lösung nach US 3 495 886 A nicht möglich.

Der Erfindung liegt daher die Aufgabe zugrunde, ein Axialgleitlager mit einem zwischen zwei ebenen, ringförmigen, gegeneinander druckbelasteten Gleitflächen angeordneten Gleitring zu entwickeln, welches die vorgenannten Nachteile des Standes der Technik beseitigt, dabei insbesondere um etwa 30% bis 80% gegenüber der bei Keilsegmentlagern üblichen mittleren Druckbelastung von etwa 30 bis 40 bar pro Keilsegment überlastsicher, und zudem gleichzeitig schwingungsunanfällig gegenüber Axialschwingungen ist, dabei fertigungstechnisch einfach hergestellt und leicht montiert werden kann, und zudem keinesfalls die die Schmierkeilwirkung drastisch beeinträchtigende "Überschnappeffekte" zulässt, so dass selbst unter erschwerten Betriebsbedingungen stets eine gezielte, an die jeweiligen Betriebsbedingungen angepasste optimale Variation des Keilwinkels gewährleistet ist, und dass bei gleichzeitig deutlicher Ausweitung des optimalen dynamischen Tragbereiches stets eine hohe Zuverlässigkeit des Axialgleitlager bei langer Lebensdauer gewährleistet werden känn.

Erfindungsgemäß wird diese Aufgabe durch ein Axialgleitlager mit einem im Axialgleitlager eingelegten Gleitring 3 nach den Merkmalen des unabhängigen Anspruches der Erfindung gelöst.
Vorteilhafte Ausführungen Einzelheiten und Merkmale der Erfindung ergeben sich aus den Unteransprüchen sowie der nachfolgenden Beschreibung der erfindungsgemäßen Lösung in Verbindung mit fünf Darstellungen zur erfindungsgemäßen Lösung.

Die Darstellungen zeigen dabei in:
- Figur 1 :: das erfindungsgemäße Axiallager mit einem in die gehäusefesten Lagerfläche 2 eingelegten Gleitring 3 in der Draufsicht;
- Figur 2:: das erfindungsgemäße Axiallager mit Gleitring in der Seitenansicht im Schnitt bei A-A, gemäß der Darstellung nach Figur 1;
- Figur 3 :: die gehäusefeste Gleitringaufnahme mit der Lagerfläche 2 des erfindungsgemäßen Axiallagers ohne den Gleitring 3 in der Draufsicht;
- Figur 4 :: die gehäusefeste Gleitringaufnahme des erfindungsgemäßen Axiallagers in der Seitenansicht im Schnitt bei B-B, gemäß der Darstellung nach Figur 3;
- Figur 5 :: den erfindungsgemäßen Gleitring 3 in der Draufsicht.

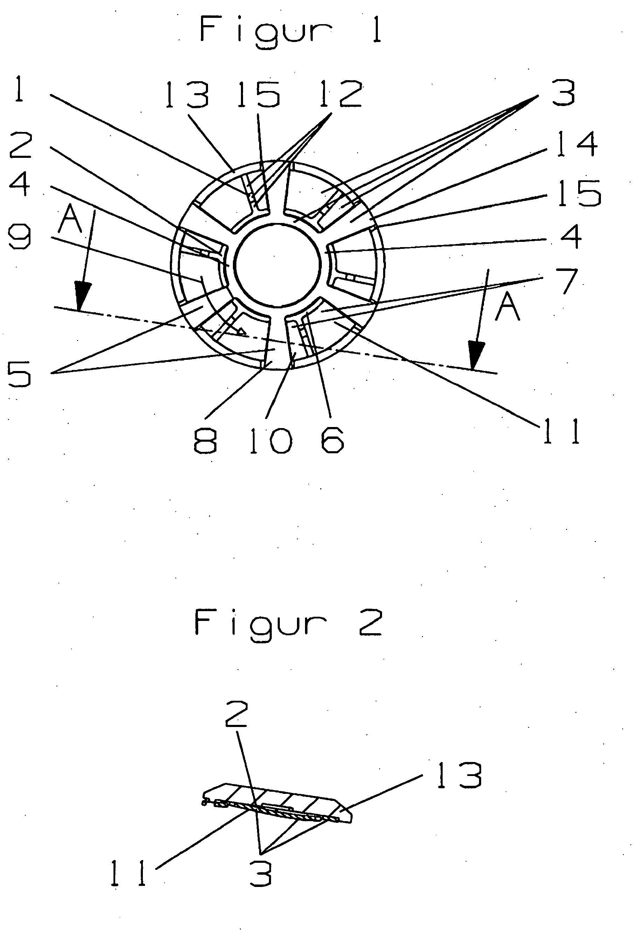

Die Figur 1 zeigt das erfindungsgemäße Axialgleitlager in der Draufsicht, mit einem zwischen einer ebenen, kreisringförmigen, druckbelasteten, mit einer oder mehreren Schmiernuten 1 versehenen gehäusefesten Lagerfläche 2, und einer dieser Lagerfläche 2 gegenüberliegend angeordneten, in der Figur 1 nicht dargestellten, ebenen, kreisringförmigen, druckbelasteten, im Betriebszustand des Axiallagers in Drehrichtung 9 umlaufende Lauffläche, mit einem, wie in der Figur 1 dargestellt, in der gehäusefesten Lagerfläche 2 eingelegten Gleitring 3.

In der Figur 2 ist das erfindungsgemäße Axiallager, gemäß der Darstellung nach Figur 1, mit dem eingelegten erfindungsgemäßen Gleitring 3 im Schnitt bei A-A in der Seitenansicht dargestellt.

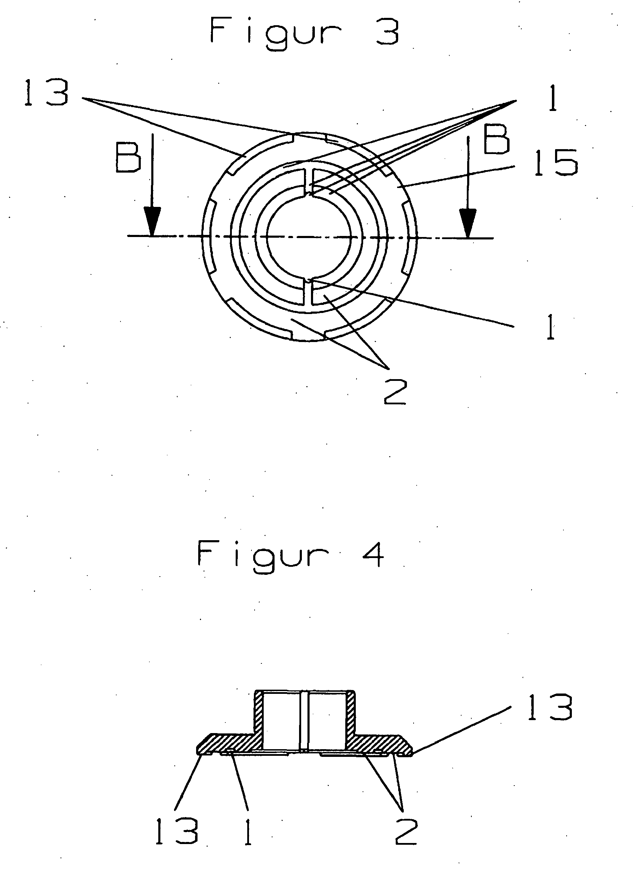

Die Figur 3 zeigt die die gehäusefeste Gleitringaufnahme mit der Lagerfläche 2 des erfindungsgemäßen Axiallagers ohne den Gleitringe 3 in der Draufsicht.

In der Figur 4 ist die erfindungsgemäße gehäusefeste Gleitringaufnahme nach Figur 3, im Schnitt bei B-B, in der Seitenansicht dargestellt.

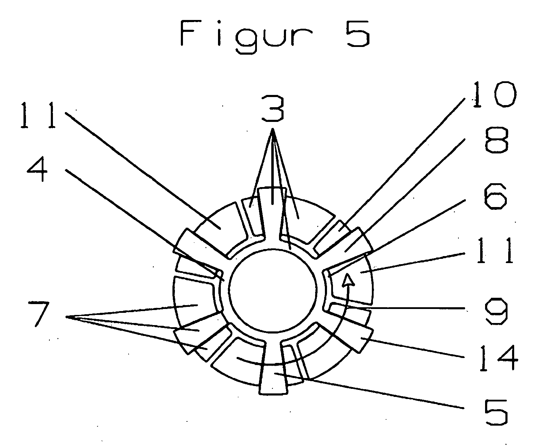

Die Figur 5 zeigt nun den erfindungsgemäßen Gleitring 3 in der Draufsicht, welcher sich erfindungsgemäß dadurch auszeichnet, dass dieser erfindungsgemäße Gleitring 3 von einem inneren Stützring 4 gebildet wird, an dessen Umfang gteichverteitt, strahlenförmig mehrere Stege 5 angeordnet sind, wobei an jedem dieser Stege 5, vom Stützring 4 um einen Ringspalt 6 beabstandet jeweils ein radiales Gleitsegment 7 angeordnet ist. Kennzeichnend dabei ist, dass jedes dieser erfindungsgemäßen Gleitsegmente 7 über eine ebene, radial an den Steg 5 anschließende; im Anlaufzustand des Lagers direkt an der Lauffläche anliegende Stützfläche 8 verfügt.

Erfindungsgemäß sind an dieser Stützfläche 8 beidseitig, in Richtung der gehäusefesten Lagerfläche zwei leicht geneigt (keilförmig) abgewinkelte Kreisringsegmentflächen angeordnet.

Kennzeichnend für diese leicht geneigt (keilförmig) abgewinkelten Kreisringsegmentflächen ist, dass diese in Drehrichtung 9 der Lauffläche an jeder der Stützflächen 8 des Gleitringes 3 eine Ablauffläche 10, und gegenüberliegend, d.h. entgegen der Drehrichtung 9 der Lauffläche an jeder der Stützflächen 8 des Gleitringes 3, eine Tragfläche 11 ausbilden. Erfindungswesentlich ist dabei, dass die Tragflächen 11 wesentlich größer als die Ablauffläche 10 ausgebildet sind.

Kennzeichnend ist zudem, dass die abgewinkelten, freien Kanten der Tragfläche 11 im Anlaufzustand des Lagers, wie auch in der Figur 2 dargestellt, eben auf der Lagerfläche 2 aufliegt, wobei zwischen den Gleitsegmenten 7, d.h. zwischen einer Ablauffläche 10 und der Tragfläche 11 des jeweils benachbarten Gleitsegmentes 7, stets ein Schmierspalt 12 angeordnet ist.

Die "angestellten" Ablaufflächen 10 stabilisieren erfindungsgemäß unter Last zudem die abgewinkelten Tragflächen 11 so dass selbst unter erschwerten, Betriebsbedingungen stets eine gezielte, an die jeweiligen Betriebsbedingungen angepasste optimale Variation des Keilwinkels gewährleistet ist, und dass bei gleichzeitig deutlicher Ausweitung des optimalen dynamischen Tragbereiches stets eine hohe Zuverlässigkeit des Axialgleitlager bei langer Lebensdauer gewährleistet werden kann.

Die hier vorliegende Lösung gewährleistet dabei auf Grund der Anordnung des erfindungsgemäßen Ringspaltes 6 in Verbindung mit den erfindungsgemäßen multifunktionalen Schmierspalten 12, welche die Gteitsegmente 7 sowohl statisch wie auch dynamisch entkoppeln und gleichzeitig aus den Schmiernuten 1 die Tragflächen 11 optimal mit Schmiermittel versorgen, eine optimale Lösung der erfindungsgemäßen Aufgabenstellung

Dabei ermöglichen die beidseitig jedes Gleitsegmentes 7 angeordneten Schmierspalte 12 in Verbindung mit der erfindungsgemäßen Gestaltung des Gleitringes, bei am Gleitring 3 anliegender druckbelasteter Lauffläche, mit Zunahme der Axialkraft erfindungsgemäß gleichzeitig ein gezieltes Abflachen des Schmierkeilwinkel an der Tragfläche, so dass ein "Überschnappen" der Gleitsegmente 7 sicher vermieden werden kann, und die die Schmierkeilwirkung drastisch beeinträchtigen "Überschnappeffekte" durch die erfindungsgemäße Lösung vollständig ausgeschlossen sind.

Infolge der erfindungsgemäß mit zunehmender Axiallast bewirkten, definieren Abflachung der/des Schmierkeilwinkel/s an den Tragflächen erfolgt gleichzeitig eine erfindungsgemäße stetige Ausweitung des dynamischen Tragbereiches. Vorteilhaft in diesem Zusammenhang ist, wenn die Tragflächen 11 etwa die 3-fache bis 5-fache Größe der Ablaufflächen 10 aufweisen.

Erfindungswesentlich ist aber auch, dass das Verhältnis des Außendurchmessers des Gleitringes 3 im Bereich der Tragflächen 11 zur Blechdicke des Gleitringes 3 kleiner/gleich 33 zu 1 beträgt, wodurch Zerstörungen des Axiallagers vermieden werden

Im Rahmen der im Vorfeld dieser Erfindungsanmeldung durchgeführte Versuche wurde für die hier vorgeschlagenen Lösung ein Verhältnis des Außendurchmessers des Gleitringes 3 im Bereich der Tragflächen 11 zur Blechdicke des Gleitringes 3 kleiner/gleich 33 zu 1 ermittelt, das Risiko für Eigenschwingungen unterbindet.

Besonders vorteilhaft ist der Bereich von 33:1 bis 20:1 für das Verhältnis vom Außendurchmessers des. Gleitringes 3 im Bereich der Tragflächen 11 zur Blechdicke des Gleitringes 3.

Selbst ein weiteres Absenken des o.g. Verhältnisses bis auf 16:1 macht technisch bei der hier vorgeschlagenen Lösung keinerlei Probleme und ist in Verbindung mit besonders hohen spezifischen Lasten sinnvoll.

Wesentlich ist aber auch, dass wie in den Figuren 1, 2 und 5 dargestellt, die Größe der Tragflächen 11 etwa das 4-fache der Größe der Ablaufflächen 10 beträgt.

Die Herstellung der Gleitringe 3 erfolgt vorzugsweise aus Aluminiumblech, Messsingblech oder Blechen einer Bronzelegierung.

Die am Gleitring gegenüber den Stützflächen 8 abgewinkelt angeordneten Tragflächen 11 sind im unbelasteten Zustand, wie beispielsweise in Figur 2 dargestellt, um etwa 0,3 ‰ bis 5 ‰ geneigt.

Erfindungsgemäß wird dies fertigungstechnisch bei der Herstellung der vorgenannten Gleitringe aus den o.g. Metallen/Metalllegierungen dadurch erreicht, dass die jeweils paarweise nach einer Vorprägung abgekanteten Bereiche der Tragflächen 11, wie auch die der Ablaufflächen 10 wieder teilweise zurückverformt werden, indem der komplett vorgeprägte Gleitring zwischen zwei Platten eben zusammengepresst wird.

Wodurch sich in der Abhängigkeit vom jeweils eingesetzten Material und in Verbindung mit der für die Restverformung fachgemäß ausgewählten Rohlingsdicke des Gleitringes, in Folge der dem Material innewohnenden Elastizität, der erfindungsgemäß gewünschte, Anstellwinkel der Tragfläche/n 11 als Restverformung einstellt.

Für spezielle Anwendungsbedingungen, wie Axialgleitlager die als Schmiermedium Wasser oder Kühlwasser benutzen, kann der erfindungsgemäße Gleitring 3 selbstverständlich auch aus temperaturbeständigem Kunststoff bereits vorgeformt hergestellt sein. Erfindungsgemäß ist auch, dass am Außenumfang der gehäusefesten Lagerfläche 2 ein Zentrierbund 13 angeordnet ist, welcher im Betriebszustand des Axiallagers den sich einstellenden Schmierkeil optimal stabilisiert, so dass bereits im unteren Drehzahlbereich ein Aufschwimmen der Lauffläche im Bereich der Tragflächen 11 des Gleitringes 3 auf den sich erfindungsgemäß ausbildenden Schmierkeilen gewährleistet ist.

Erfindungsgemäß in diesem Zusammenhang ist auch, wenn, wie in der Figur 1 dargestellt, alle Stützflächen 8 die an diese angeschlossenen Ablaufflächen 10 und Tragflächen 11 um jeweils einen Positioniersteg 14 radial überragen, und im Zentrierbund 13 zur Aufnahme der Positionierstege 14 Rastnuten 15 angeordnet sind, wodurch eine Drehfixierung des Gleitringes 3 im Bereich der gehäusefesten Lagerfläche 2 gewährleistet werden kann.

Eine derartige Drehfixierung des Gleitringes 3 ist jedoch nicht zwingend erforderlich.

In Folge der unterschiedlichen Reibverhältnisse auf beiden Seiten des Gleitringes stellt sich erfindungsgemäß zudem ein Selbstoptimierungseffekt ein, welcher bewirkt, dass sich der Gleitring 3 auch ohne eine formschlüssige Positionierung an/in der Lagerfläche nicht bzw. in der Anlaufphase nur geringfügig drehend in die Drehrichtung 9 der Lauffläche mitbewegt.

### Bezugszeichenzusammenstellung

- 1: Schmiernut
- 2: Lagerfläche
- 3: Gleitring
- 4: Stützring
- 5: Steg
- 6: Ringspalt
- 7: Gleitsegment
- 8: Stützfläche
- 9: Drehrichtung (der benachbart angeordneten Lauffläche)
- 10: Ablauffläche
- 11: Tragfläche
- 12: Schmierspalt
- 13: Zentrierbund
- 14: Positioniersteg
- 15: Rastnuten

## Patentansprüche

1. Axialgleitlager bei dem zwischen einer ebenen, kreisringförmigen, druckbelasteten, mit einer oder mehreren Schmiernut/en (1) versehenen gehäusefesten Lagerfläche (2) und einer dieser Lagerfläche (2) gegenüberliegend angeordneten, ebenen, kreisringförmigen, druckbelasteten Lauffläche ein Gleitring (3) angeordnet ist, **dadurch gekennzeichnet,**
- **dass** der Gleitring (3) von einem inneren Stützring (4) gebildet wird, an dessen Umfang gleichverteilt, strahlenförmig mehrere Stege (5) angeordnet sind, wobei an jedem dieser Stege (5), vom Stützring (4) um einen Ringspalt (6) beabstandet jeweils ein radiales Gleitsegment (7) derart angeordnet ist,
- **dass** jedes der Gleitsegmente (7) über eine ebene, radial an den Steg (5) anschließende, im Anlaufzustand des Lagers eben an der Lauffläche anliegende Stützfläche (8) verfügt, an der beidseitig in Richtung Lagerfläche (2) leicht geneigt abgewinkelte Kreisringsegmentflächen derart angeordnet sind,
- **dass** an jeder Stützfläche (8) des Gleitringes (3), in Drehrichtung (9) der Lauffläche, eine Ablauffläche (10) und entgegen der Drehrichtung (9) der Lauffläche eine Tragfläche (11) angeordnet ist, welche derart ausgebildet sind,
- dass die Tragfläche (11) wesentlich größer als die Ablauffläche (10) ist, wobei im axial unbelasteten Zustand des Lagers die abgewinkelte, freie Kante der Tragfläche (11) eben auf der Lagerfläche (2) aufliegt, und zwischen den Gleitsegmenten (7), d.h. zwischen jeder Ablauffläche (10) und jeder Tragfläche (11) jeweils ein Schmierspalt (12) angeordnet ist, und
- **dass** das Verhältnis des Außendurchmessers des Gleitringes (3) im Bereich der Tragflächen (11) zur Blechdicke des Gleitringes (3) kleiner/gleich 33 zu 1 beträgt.

2. Axialgleitlager nach Anspruch 1, **dadurch gekennzeichnet, dass** die Tragflächen (11) etwa die 3- bis 5-fache Größe der Ablaufflächen (10) aufweise.

3. Axialgleitlager nach Anspruch 1, **dadurch gekennzeichnet, dass** beim unbelasteten Gleitring die Tragflächen (11) gegenüber den Stützflächen (8) etwa um 0,3 ‰ bis 5 ‰ geneigt abgewinkelt sind.

4. Axialgleitlager nach Anspruch 1, **dadurch gekennzeichnet, dass** am Außenumfang der gehäusefesten Lagerfläche (2) ein Zentrierbund (13) angeordnet ist.

5. Axialgleitlager nach Anspruch 1, **dadurch gekennzeichnet, dass** mehrere oder auch alle Stützflächen (8) die jeweils an diese angeschlossenen Ablaufflächen (10) und Tragflächen (11) um jeweils einen Positioniersteg (14) radial überragen.

6. Axialgleitlager nach Anspruch 4, **dadurch gekennzeichnet, dass** im Zentrierbund (13) zur Aufnahme der Positionierstege (14) Rastnuten (15) angeordnet sind.

## Claims

1. Axial sliding bearing where a sliding ring (3) is located between a flat, annular-shaped, pressure-loaded, body-strengthened bearing surface (2) provided with one or several lubrication groove(s) (1) and a flat, annular-shaped, pressure-loaded running surface lying opposite to this bearing surface (2), **characterized by** the fact
- the sliding ring (3) is formed by an inside support ring (4) where several bars (5) are evenly distributed around its circumference to form a radial pattern, whereby a radial sliding segment (7) is located at each of these bars (5) projecting from the support ring (4) by one annular gap (6) in such a way
- that each of the sliding segments (7) also has a flat support surface (8) connecting radially to the bar (5) at the running surface in the start-up condition of the bearing, where slightly inclined and angled annular ring segment surfaces are located on both sides of the bearing surface (2) in such a way
- that a run-off surface (10) is located at each support surface (8) of the sliding ring (3) in the rotational direction (9) of the running surface and a load surface (11) is located opposite to the rotational direction (9) of the running surface, and
- that the load surface (11) is considerable larger than the run-off surface (10) whereby the angled, free edge of the load surface (11) lies flush on the bearing surface (2) in an axially unloaded condition of the bearing, and one lubrication gap (12) respectively is located between the sliding segments (7), in other words between each run-off surface (10) and each load surface (11), and
- that the relationship of the outside diameter of the sliding ring (3) near the load surfaces (11) to the sheet metal thickness of the sliding ring (3) is smaller than / equal to 33 to 1.

2. Axial sliding bearing according to claim 1, **characterized by** the fact that the load surfaces (11) are approximately 3 to 5 times the run-off surfaces (10).

3. Axial sliding bearing according to claim 1, **characterized by** the fact that the load surfaces (11) with an unloaded slide ring are angled by approx. 0.3% to 5% with respect to the support surfaces (8).

4. Axial sliding bearing according to claim 1, **characterized by** the fact that a centering collar (13) is located on the outside circumference of the body-strengthened bearing surface (2).

5. Axial sliding bearing according to claim 1, **characterized by** the fact that several or also all the support surfaces (8) at these respective connected run-off surfaces (10) and load surfaces (11) protrude radially by one positioning bar (14) respectively.

6. Axial sliding bearing according to claim 4, **characterized by** the fact that locking grooves (15) are located in the centering collar (13) for holding the positioning bars (14).

## Revendications

1. Palier axial à coulissement présentant un anneau de coulissement (3) étant disposé entre une surface de palier (2) plane, courbée en forme d'anneau, soumise à une pression, solidaire du carter, pourvue d'une ou plusieurs rainure/s de lubrification (1) et une surface de roulement plane, courbée en forme d'anneau, soumise à une pression et disposée vis-à-vis de cette surface de palier (2), **caractérisé par le fait**
- **que** l'anneau de coulissement (3) est formé par un anneau de support (4) intérieur, sur le pourtour duquel plusieurs oblongs (5) divergents sont disposés de manière régulière, sur chacun de ces oblongs (5) étant disposé resp. un segment de coulissement (7) radial, espacé de l'anneau de support (4) par une fente annulaire (6), de telle manière
- **que** chacun de ces segments de coulissement (7) dispose d'une surface de support (8) plane, jointe radialement à l'oblong (5), appliquée de manière plane sur la surface de roulement dans l'état de démarrage du palier, sur laquelle surface de support (8) sont disposés des surfaces de segment en couronne des deux côtés en direction de la surface de palier (2), légèrement en biais, de telle manière
- **que**, sur chaque surface de support (8) de l'anneau de coulissement (3), dans le sens de rotation (9) de la surface de roulement, une surface d'écoulement (10) est disposée et que, dans le sens contraire au sens de rotation (9) de la surface de roulement, une surface d'appui (11) est disposée, ces surfaces étant formées de telle manière
- **que** la surface d'appui (11) est bien plus grande que la surface d'écoulement (10), le rebord libre à angle de la surface d'appui (11) reposant de manière plane sur la surface de palier (2) en état axial de non contrainte du palier, et que, entre les segments de coulissement (7), c'est-à-dire entre chaque surface d'écoulement (10) et chaque surface d'appui (11) est disposée resp. une fente de lubrification (12), et
- **que** le rapport entre le diamètre extérieur de l'anneau de coulissement (3) dans la zone des surfaces d'appui (11) et l'épaisseur de tôle de l'anneau de coulissement (3) est inférieur/égal à 33 sur 1.

2. Palier axial à coulissement selon l'exigence 1 **caractérisé par le fait que** la dimension des surfaces d'appui (11) est de 3 à 5 fois celle des surfaces d'écoulement (10).

3. Palier axial à coulissement selon l'exigence 1 **caractérisé par le fait que**, en cas d'anneau de coulissement non soumis à une contrainte, les surfaces d'appui (11) sont inclinées d'environ 0,3 ‰ à 5 ‰ par rapport aux surfaces de support (8).

4. Palier axial à coulissement selon l'exigence 1 **caractérisé par le fait qu'**une bride de centrage (13) est disposée sur le pourtour extérieur de la surface de palier (2) solidaire du carter.

5. Palier axial à coulissement selon l'exigence 1 **caractérisé par le fait que** plusieurs ou bien aussi toutes les surfaces de support (8) dépassent de manière radiale les surfaces d'écoulement (10) et les surfaces d'appui (11) resp. raccordées à celles-ci de chacune un oblong de positionnement (14).

6. Palier axial à coulissement selon l'exigence 4 **caractérisé par le fait que** des rainures d'arrêt (15) sont disposées dans la bride de centrage (13) afin d'y recevoir les oblongs de positionnement (14).
